(19) Europäisches Patentamt
European Patent Office
Office européen des brevets

(11) Veröffentlichungsnummer: **0 487 450 B1**

(12) **EUROPÄISCHE PATENTSCHRIFT**

(45) Veröffentlichungstag der Patentschrift: **20.09.95**

(51) Int. Cl.$^6$: **G01L 1/24**

(21) Anmeldenummer: **91810862.2**

(22) Anmeldetag: **07.11.91**

# (54) Verfahren und Einrichtungen zur faseroptischen Kraftmessung.

(30) Priorität: **22.11.90 DE 4037077**

(43) Veröffentlichungstag der Anmeldung:
**27.05.92 Patentblatt 92/22**

(45) Bekanntmachung des Hinweises auf die Patenterteilung:
**20.09.95 Patentblatt 95/38**

(84) Benannte Vertragsstaaten:
**CH DE FR GB LI SE**

(56) Entgegenhaltungen:
**EP-A- 0 120 999**
**EP-A- 0 153 997**
**EP-A- 0 396 191**
**DE-A- 3 726 146**
**GB-A- 1 544 483**

**OPTICS COMMUNICATIONS Bd. 79, Nr. 5, 1. November 1990, Amsterdam NL, Seiten 295-299, XP000158991; F. PICHERIT U.A.: "INTERFEROMETRIC-POLARIMETRIC FORCE AND TEMPERATURE SENSOR USING HIGH AND LOW BIREFRINGENCE FIBRES WITH A SHORT COHERENCE LENGTH SOURCE"**

(73) Patentinhaber: **HILTI Aktiengesellschaft**
**FL-9494 Schaan (LI)**

(72) Erfinder: **Odoni, Walter, Dr.**
**Im Fetzer 45 B**
**FL-9494 Schaan (LI)**
Erfinder: **Dändliker, René, Prof.Dr.**
**Institut pour la Microtechnique de l'Université**
**CH-2000 Neuchâtel (CH)**
Erfinder: **Schad, Hanspeter, Dr.**
**Boldistrasse 6**
**CH-5415 Nussbaumen (CH)**
Erfinder: **Schweizer, Edwin**
**Gribstrasse 13**
**CH-9475 Sevelen (CH)**

(74) Vertreter: **Wildi, Roland**
**Hilti Aktiengesellschaft**
**Patentabteilung**
**FL-9494 Schaan (LI)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 487 450 B1**

PATENT ABSTRACTS OF JAPAN vol. 9, no. 292 (P-406)(2015) 19. November 1985 ; & JP-A-60 129 633

ELECTRONICS LETTERS, Bd. 25, Nr. 6, Juli 1989, Stevenhage GB, Seiten 919-921, XP000067427; F. MAYSTRE U.A.: "POLARIMETRIC RESONATOR SENSOR WITH HIGH SENSITIVITY AND LARGE DYNAMIC RANGE"

## Beschreibung

Die Erfindung betrifft Verfahren zur faseroptischen Kraftmessung, die auf der spannungsinduzierten Doppelbrechungsänderung eines Monomode-Lichtwellenleiters beruhen. Erfindungsgegenstand sind außerdem Einrichtungen zur faseroptischen Messung des Absolutwerts der Vorspannung in einem durch Zug- oder Druckkräfte hochbelasteten mechanischen Bauteil.

Es gibt viele mechanische Bauteile, die vorgespannt über lange Zeiten große Druck- oder Zugkräfte aufnehmen müssen, wie Seile, Stangen, Drähte und Schrauben. Ein solches Bauteil ist beispielsweise auch ein Schwerlastdübel. Das Wissen um die Vorspannung in einem solchen Dübel ist wichtig, um kontrollierte Bedingungen bei der Befestigung zu erreichen. Aufgrund von Alterung und Korrosion des Betons, insbesondere durch Witterungseinflüsse, können Dübel, die durch Reibschluß verankert und vorgespannt sind, in ihrer Vorspannung relaxieren.

Zur Ermittlung der Vorspannung wird heute meist eine indirekte Methode angewendet, nämlich die Messung über das Drehmoment. Im Prinzip kann, wie die Skizze der beigefügten Fig. 1 veranschaulicht, durch eine Drehmomentkontrolle einer Spreizschraube 1 und durch Nachspreizen der Spreizelemente 2 Abhilfe geschaffen werden. Doch verhindern undefinierte Reibungseinflüsse (Haft-, Gleitreibung) selbst schon beim Setzen des Dübels D eine definierte Einstellung der Vorspannung. Das Drehmoment ist aber auch keine eindeutige Funktion der Vorspannung und läßt sich nur beim Anziehen, also beim Setzen des Dübels D messen.

Besonders bei sicherheitsrelevanten Anwendungen wäre eine automatische Nachspreizung und/oder eine permanente Überwachung wünschenswert auch schon beim Setzen des Dübels. Hierzu muß ein Kraftsensor in das Bauelement, beispielsweise den Dübel, integriert werden. Als solche Kraftsensoren sind piezoelektrische Systeme (Quarzkraftmeßringe) und Systeme mit Dehnungsmeßstreifen (DSM) z. B. in Form von Wägezellen oder als Ringkraftaufnehmer bekannt. Solche direkten Meßinstrumente zur Ermittlung der Vorspannung haben aber im allgemeinen, abgesehen von dem hohen Preis, für viele Anwendungsfälle den Nachteil einer zu großen Bauform. Der Quarzsensor eignet sich außerdem nur für dynamische Messungen.

Bekannt sind auch indirekte Methoden, die z. B. auf der Längenänderung der vorgespannten Gewindestange des Dübels beruhen, die z. B. mit Ultraschallaufzeitmessung erfaßt werden können. Diese Methode setzt jedoch voraus, daß der Dübel selbst kalibriert und dessen Daten registriert werden müssen.

Der Erfindung liegt damit die Aufgabe zugrunde, ein Meßverfahren und einen vergleichsweise kostengünstigen Kraftsensor zu entwickeln, die sich zur kontinuierlichen oder bedarfsweisen Messung des Absolutwerts der in einem hochbelasteten mechanischen Bauelement auftretenden Kräfte eignet.

Die Untersuchungen der verschiedenen Möglichkeiten für einen aussichtsreichen Lösungsansatz beschäftigen sich auch mit der faseroptischen Kraftmessung, die auf der spannungsinduzierten Doppelbrechung eines Monomode-Lichtwellenleiters (im folgenden LWL) beruht. Grundlegende Ergebnisse für diese Art der Kraftmessung sind in den Literaturstellen Lit. [1] bis [3] (siehe Anhang) ausführlich beschrieben. Die bisher bekannten Meßverfahren zur Auswertung der spannungsinduzierten Doppelbrechung in einem LWL sind jedoch für die gewünschte Absolutmessung ungeeignet, da sie mehrdeutig modulo $2\pi$ sind.

Für die absolute, d. h. nicht-modulo-$2\pi$ unbestimmte Erfassung der durch die mechanische Kraft im belastenden Bauelement induzierten Doppelbrechung eines LWL werden mit der Erfindung zwei grundsätzliche Verfahren bzw. Kraftmeßeinrichtungen vorgeschlagen. Das (Die) eine beruht auf der in den genannten Literaturstellen beschriebenen Art der Kraftmessung, jedoch mit der erfindungsgemäß wesentlichen Ergänzung, daß zwei Wellenlängen simultan oder sequentiell verwendet werden, um daraus, wie weiter unten ausführlich erläutert, die Modulo-$2\pi$-Unsicherheit zu beseitigen. Die zweite erfindungsgemäß vorgeschlagene Verfahrensvariante ist ein Kompensationsverfahren, bei dem der durch die Doppelbrechung im LWL verursachte Phasen- oder Gangunterschied der beiden linearen Moden durch ein Michelson-Interferometer kompensiert wird. Dabei wird eine möglichst inkohärente Lichtquelle, also keine monochromatische Lichtquelle, wie beispielsweise eine Laserdiode, eingesetzt und die sogenannte Kohärenzdetektion wird zur Signalauswertung herangezogen.

Das erfindungsgemäße Verfahren der eingangs erwähnten Art zur faseroptischen Kraftmessung ist gemäß der ersten erfindungsgemäßen Lösungsvariante dadurch gekennzeichnet, daß zur Erzielung eindeutiger Meßergebnisse, d. h. zur Absolutmessung, zwei Lichtwellen unterschiedlicher Wellenlängen in ein Ende eines Lichtwellenleiters eingestrahlt werden, und ein durch eine Krafteinwirkung auf den Lichtwellenleiter und die daraus folgende Doppelbrechungsänderung verursachter Phasenunterschied der beiden linearen Moden der am anderen Ende des Lichtwellenleiters austretenden Lichtwellen erfaßt und als Maß für die Kraft ausgewertet wird.

Eine Einrichtung zur faseroptischen Messung des Absolutwerts der Vorspannung in einem durch Zug- oder Druckkräfte hochbelasteten mechanischen Bauteil, bei welcher das Verfahren in der definierten Art eingesetzt wird, zeichnet sich erfindungsgemäß dadurch aus, daß der faseroptische LWL über einen zwischen seinen freien Enden liegenden Teilbereich seiner Länge in eine quer zur Kraftrichtung angeordnete druckübertragende Scheibe eingebettet ist, daß das eine Ende des LWL - gleichzeitig oder sequentiell abwechselnd - durch zwei monochromatische Lichtquellen unterschiedlicher Wellenlängen beaufschlagt ist und daß die beiden am anderen Ende des Lichtwellenleiters austretenden Lichtwellen über einen polarisierenden Strahlteiler in die beiden Moden getrennt, photoelektrisch erfaßt und über eine kalibrierte Auswertelogik mit Zwischenspeicherung der Einzelmeßwerte durch Phasenvergleich die Vorspannkraft in dem Bauteil bestimmt wird.

Das andere erfindungsgemäße Verfahren, nämlich das sogenannte Kompensationsverfahren zur faseroptischen Kraftmessung, die auf der spannungsinduzierten Doppelbrechungsänderung eines Monomode-Lichtwellenleiters beruht, ist erfindungsgemäß dadurch gekennzeichnet, daß zur Erzielung eindeutiger Meßergebnisse, d. h. zur Absolutmessung, polarisiertes Weißlicht in ein Ende des Lichtwellenleiters eingestrahlt und ein durch eine Krafteinwirkung auf den Lichtwellenleiter und die daraus folgende Doppelbrechungsänderung verursachte Phasen- oder Gangunterschied der beiden linearen Moden der am anderen Ende des Lichtwellenleiters austretenden Lichtwellen durch ein mit vorgeschaltetem polarisierendem Strahlteiler zur Modentrennung und an dessen Ausgängen mit $\lambda/4$-Platten versehenes Michelson-Interferometer mit elektronisch verstellbarer Spiegelanordnung kompensiert wird, und daß ein die Spiegelverstellung zur Kompensation des Gang- oder Phasenunterschieds bewirkende Steuersignal als Maß für die Kraft ausgewertet wird.

Vorteilhafte Weiterbildungen und Ergänzungen der beiden erfindungsgemäßen Meßprinzipien mit zwei Lichtstrahlen unterschiedlicher Wellenlängen einerseits bzw. mit nichtkohärentem Licht, vorzugsweise mit Weißlicht andererseits, sind in den abhängigen Patentansprüchen angegeben und/oder werden in der nachfolgenden Beschreibung mit Bezug auf die Zeichnung auch hinsichtlich vorteilhafter Einzelheiten erläutert. Es zeigen:

- Fig. 1 als Beispiel für ein hochbelastetes mechanisches Bauelement einen Schwerlastdübel;
- Fig. 2 eine Skizze zur Erläuterung des Prinzips der Erfindung;
- Fig. 3 ein Ausführungsbeispiel für den Einbau eines LWL in eine kraftübertragende Scheibe;
- Fig. 4 den Prinzipaufbau für eine faseroptische Kraftmeßeinrichtung, der das (erste) erfindungsgemäße Zweiwellenlängen-Verfahren zur Kraftmessung mit Auswertung nach der sogenannten Quadratur-Methode zugrundeliegt;
- Fig. 5 den Prinzipaufbau für eine andere Ausführungsform einer faseroptischen Kraftmeßeinrichtung, der das (erste) erfindungsgemäße Zweiwellenlängen-Meßverfahren zur Kraftmessung mit Auswertung nach der sogenannten Phasen-Schiebemethode zugrundeliegt;
- Fig. 6 eine Prinzipskizze zur Erläuterung des (zweiten) erfindungsgemäßen Verfahrens zur faseroptischen Kraftmessung mit Auswertung nach dem sogenannten Kompensationsprinzip;
- Fig. 7 den berechneten Kurvenverlauf des Spektrums innerhalb der Kohärenzlänge einer Weißlichtquelle bei Verwendung einer lichtemittierenden Diode und Anwendung des Kompensationsverfahrens gemäß der (zweiten) Ausführungsvariante der Erfindung;
- Fig. 8 eine der Fig. 7 entsprechende Spektraldarstellung bei Verwendung einer Halogenlampe als Lichtquelle bei Anwendung des erfindungsgemäßen Kompensationsverfahrens;
- Fig. 9 der Darstellung der Fig. 7 und 8 entsprechende Meßkurven, bei denen nicht-ideale Komponenten des Meßaufbaus zu unvollständiger Durchmodulation führen; und
- Fig. 10 den Prinzipaufbau einer faseroptischen Kraftmeßeinrichtung für das zweite erfindungsgemäße Verfahren mit Verwendung von Weißlicht und Signalauswertung nach der Kompensationsmethode.

Zunächst wird der Erfindungsgedanke einer seriellen Messung der Vorspannkraft in einem hochbelasteten mechanischen Bauelement unter Verwendung zweier Lichtwellenlängen gemäß der ersten grundsätzlichen Ausführungsvariante der Erfindung anhand eines typischen Anwendungsbeispiels bei einem Schwerlastdübel erläutert.

Die bereits erwähnte Fig. 1 zeigt einen in ein Mauerwerk 6 eingesetzten Dübel D, der an seinem Schraubenkopf mittels eines Festsetzmoments Mt angezogen werden kann, wobei über das Gewinde 1 die Spreizkrallen 2 in bekannter Weise nach außen in das Mauerwerk 6 gedrückt werden, so daß im Dübel die Vorspannkraft N erzeugt wird, die über eine Unterlagscheibe 3 auf ein zu befestigendes Bauteil 17 bzw. in das Mauerwerk 6 übertragen wird.

Um die Vorspannkraft messen zu können, ist erfindungsgemäß vorgesehen, eine Lichtleitfaser 4, also den LWL, in die Unterlagscheibe 3 über einen Teilbereich 4′ ihrer Länge einzubetten (vgl. Fig. 2 bis 5 und 10). Da der LWL 4 allein die typischen Vorspannkräfte von z. B. 10 bis 30 kN, verteilt auf eine Schleifenlänge des eingespannten Teilbereichs 4′ von 60 mm nicht aufnehmen kann, muß die Unterlagscheibe 3 so modifiziert werden, daß der LWL 4 nur den entsprechenden Flächenbruchteil aushalten muß und andererseits durch die Ummantelung vor Überlastung und Korrosion geschützt ist. Für diese Einbettung eignen sich verschiedene Verfahren, wie z. B. Löten, Galvanisieren, Kleben, Flammspritzen und Sintern sowie verschiedene Einbettmaterialien, insbesondere Verbundwerkstoffe, Metalle, metallische Lote, insbesondere Glaslote. Wichtig ist, daß bei diesen Einbettverfahren der Transformationspunkt des LWL 4 (typischerweise 900 °C) nicht überschritten und der LWL 4 mechanisch nicht überlastet wird. Außerdem muß die Einbettung elastisch sein, d. h. sie darf kein Kriech- oder Hystereseverhalten zeigen, sie muß homogen sein und die Elastizitätsmoduln des oder der verwendeten Einbettmaterialien und deren Konstanten müssen an den thermischen Ausdehnungskoeffizienten des LWL 4 und des Metallmaterials der nachfolgend näher beschriebenen Unterlagscheibe 3 angepaßt sein. Als gut geeignetes Material hat sich Glaslot der Glastypen 8472 und 8474 der Firma SCHOTT sowie Erosil-gefülltes Polymethacrylat (kalthärtend, warmhärtend oder auch UV-härtend) der Firma Ivoclar (Bezeichnungen Isopast®, SR-Isosit®, Heliomolar®) erwiesen.

Fig. 3 veranschaulicht den konstruktiven Aufbau einer Unterlagscheibe 3, die aus zwei einzelnen Ringscheiben 3a und 3b aus Metall besteht, zwischen denen der Teilbereich 4′ des LWL 4 in ein Glaslot 5 eingebettet ist. Zum weiteren Schutz gegen Überlastung sind zwei Abstandshaltering 6a bzw. 6b vorgesehen.

Die Vorspannkraft N, die zwischen den beiden Ringscheiben 3a, 3b wirkt, verursacht unter anderem zwei verschiedene Spannungskomponenten im Zentrum der Lichtleitfaser des LWL 4, nämlich eine parallel und die andere senkrecht zum Druck auf die Faser. Durch die elasto-optischen Eigenschaften der Lichtleitfaser 4 entsteht ein doppelbrechendes Medium, d. h. es entsteht eine Phasenverschiebung zwischen dem parallel zum Druck und dem senkrecht dazu polarisierten Licht, das durch die Faser 4 hindurchläuft. Diese Phasenverschiebung ist ein direktes Maß für die auf die Unterlagscheibe 3 wirkende Kraft.

Die Phasenverschiebung ist im allgemeinen ein Vielfaches von $2\pi$. Die Vorspannkraft N kann daher durch einfaches Zählen der periodischen Änderung der Polarisation bei einem Belastungsvorgang ermittelt werden. Bei nachträglichen Messungen der Vorspannung versagt diese Methode jedoch, weil das auswertbare Ergebnis der spannungsinduzierten Doppelbrechung mehrdeutig modulo $2\pi$ ist. Durch die erfindungsgemäße Messung der Phasenverschiebung von zwei Lichtstrahlen mit zwei unterschiedlichen Wellenlängen kann diese Schwierigkeit umgangen werden. Durch Vergleich der beiden Meßergebnisse läßt sich in einem vorgegebenen Meßbereich die Anzahl der $2\pi$-Perioden eindeutig ermitteln.

Ein erstes Ausführungsbeispiel für den prinzipiellen Aufbau einer Einrichtung zur Durchführung des (ersten) erfindungsgemäßen Zweilängen-Meßverfahrens nach der sogenannten Quadratur-Methode zeigt die Fig. 4. Am linksseitigen freien Ende des LWL 4 wird monochromatisches Licht mit zwei unterschiedlichen Wellenlängen $\lambda_1$ bzw. $\lambda_2$ in den faseroptischen Kraftsensor, wie oben beschrieben eingestrahlt. Das rechtsseitige freie Ende des LWL 4 gibt das austretende Licht an eine Detektoreinheit 7 ab zur Analyse der Polarisation des ursprünglich linear polarisierten Lichts nach Durchlauf des doppelbrechenden, eingebetteten Teilbereichs 4′ des LWL 4. Im dargestellten Ausführungsbeispiel besteht die Lichtquelle im wesentlichen aus zwei monomodigen Infrarot-Laserdioden $LD_1$ bzw. $LD_2$, die Licht mit Wellenlängen um 800nm liefern mit einem Wellenlängenunterschied von ca. 10nm, abhängig vom gewünschten absoluten Kraftmeßbereich. Um diese Wellenlängen konstant zu halten, sollte sowohl die Temperatur als auch der Durchlaßstrom der Laserdioden $LD_1$, $LD_2$ geregelt sein. Durch eine Elektronik (nicht dargestellt) wird z. B. periodisch zwischen den beiden Laserdioden $LD_1$, $LD_2$ hin- und hergeschaltet oder die beiden Laserdioden $LD_1$, $LD_2$ werden mit unterschiedlichen Frequenzen intensitätsmoduliert. Da die Laserdioden polarisiertes Licht erzeugen, genügt ein durch zwei angedeutete Linsen veranschaulichter, einfacher Kollimatoraufbau mit Strahlteiler ST1, um definiert polarisiertes Licht, insbesondere unter 45° Verkippung zur optischen Achse, d. h. der Spannungsachse der doppelbrechenden Komponente, in den Monomode-LWL 4 des Kraftsensors einzukoppeln.

Die Detektoreinheit 7 umfaßt außer einem wiederum nur schematisch angedeuteten Kollimatoraufbau einen zweiten Strahlteiler ST2 zur Trennung der beiden Moden. Dem einen Ausgang des zweiten Strahlteilers ST2 ist eine $\lambda/4$-Platte 8 sowie ein Polarisator P2 nachgeschaltet, bevor der eine Intensitätsanteil (die eine Mode) auf einen ersten Photodetektor $PD_1$ gelangt. Der zweite Ausgang des zweiten Strahlteilers ST2 beaufschlagt über eine weitere $\lambda/4$-Platte 8′ und einen weiteren Polarisator P1 einen zweiten Photodetektor $PD_2$. Mit diesem Aufbau der Detektoreinheit 7 läßt sich die in dem mechanischen Bauteil wirkende Vorspannkraft nach der sogenannten Quadratur-Methode ermitteln, wie weiter unten näher erläutert und in den Literaturstellen [1] und [4] beschrieben.

Bei dem Prinzipaufbau einer Kraftmeßanordnung nach Fig. 5, die sich zur Kraftmessung mit der Phasenschiebe-Methode eignet, entspricht die Detektoreinheit 7′ einem modifizierten Michelson-Interferometer. Zwischen dem polarisierenden Strahlteiler PST und den Spiegeln 9, 10 sind aus weiter unten

erläuterten Gründen $\lambda/4$-Platten 11, 12 zwischengeschaltet. Der Ausgang des Interferometers beaufschlagt über eine weitere $\lambda/4$-Platte 13 und einen weiteren Polarisator 14 einen Photodetektor, z. B. eine Photodiode PD. Der eine Spiegel 10 ist senkrecht zu seiner Spiegelfläche um vorgebbare, einer bestimmten Phasenverschiebung entsprechende Wegelemente mittels eines Piezo-Stellelements 15 verschiebbar, dessen Stellsignale durch eine beispielsweise mittels Mikroprozessor verwirklichte Steuereinheit 16 vorgegeben werden.

Mit den beiden anhand der Fig. 4 und 5 beschriebenen Meßaufbauten läßt sich die Vorspannkraft nach dem Quadraturverfahren einerseits (siehe Lit. [1] und [4]) bzw. mittels des Phasenstufenverfahrens (Lit. [5]) bestimmen.

Zunächst wird das Quadraturverfahren in Anwendung auf die Erfindung erläutert:

Das Licht, das den Lichtwellenleiter 4 verläßt und auf die Detektoreinheit 7 gelangt, wird durch den Strahlteiler ST2 in zwei Lichtstrahlen gleicher Intensität aufgeteilt. Beide durchlaufen dann jeweils eine der $\lambda/4$-Platten 8 bzw. 8′ und einen der Polarisatoren P2 bzw. P1. Die Stellung der $\lambda/4$-Platten 8, 8′ und der Polarisatoren P1, P2 ist nun so gewählt, daß die erste Diode $PD_1$ ein cosinusförmiges Phaseverschiebungssignal erfaßt und die andere $PD_2$ ein sinusförmiges. Die Diodensignale sind also durch

$$I_1 = I_0 (1 + \cos\delta) \text{ bzw. } I_2 = I_0 (1 + \sin\delta) \quad (1)$$

gegeben. Daraus läßt sich die Phase $\delta$ zu

$$\tan\delta = (I_2 - I_0)/(I_1 - I_0) \quad (2)$$

bestimmen. Sinnvoll ist es hierzu, $I_0$ separat zu bestimmen, alle drei Signale zu digitalisieren und Gleichung (2) in einem Mikroprozessor zu lösen.

Das Quadraturverfahren setzt ideale optische Eigenschaften der $\lambda/4$-Platten 8, 8′ und der Polarisatoren P1, P2 voraus. Da solche Bauelemente oft nicht verfügbar oder extrem teuer sind, wurde das Phasenstufenverfahren (vgl. Lit. [5]) gefunden, das auch mit nichtidealen Komponenten gute Werte für die Phasenverschiebung liefert. Ein nichtideales Signal ist durch

$$I = a(1 + m \cos\delta) \quad (3)$$

beschrieben, wobei mit a eine mittlere Intensität und mit m der Modulationsgrad bezeichnet sind. Um diese Gleichung hinsichtlich der Phase $\delta$ zu lösen, benötigt man also mindestens drei unabhängige Meßsignale. Dabei ist es, wie in Fig. 5 gezeigt, günstiger, mit einer einzigen Photodiode PD zu arbeiter, aber zusätzlich eine Phasenverschiebungseinheit, bestehend aus dem mit dem Piezo-Stellelement 15 verbundenen Spiegel, zu benutzen, so daß unabhängige Meßsignale zu erhalten sind. Die Ansatzgleichung (3) verändert sich dann zu

$$I_i = a(1 + m \cos(\delta + \Phi_i)) \quad (4)$$

Wählt man z. B. vier Phasenverschiebungen mit $\Phi_i = 0, \pi/2, \pi, 3\pi/2$, so läßt sich die gesuchte Phasenverschiebung $\delta$ durch Auswertung mittels des Zusammenhangs

$$\tan\delta = (I_3 - I_1)/(I_2 - I_4) \quad (5)$$

bestimmen. Die nötigen festen Phasenverschiebungen $\Phi_i$ können, wie in Fig. 5 veranschaulicht, durch den erläuterten modifizierten Michelson-Interferometeraufbau realisiert werden. Damit wird erreicht, daß die orthogonal zueinander polarisierten Lichtstrahlen, wie sie den Lichtwellenleiter 4 verlassen, unterschiedliche Wege gehen ur.d sich erst nach dem Polarisator POL auf der Photodiode PD wieder vereinen. Durch die definierte Verschiebung des einen der Spiegel 9, 10, im dargestellten Beispiel des Spiegels 10, mit dem elektrisch gesteuerten Piezo-Stellelement 15 läßt sich die erwünschte Phasenverschiebung zwischen diesen Strahlen realisieren. Wiederum ist der Einsatz eines Mikroprozessors 16 zur Vorgabe der elektrischen Signale zur Positionierung des Spiegels 10 und zur Weiterverarbeitung der digitalisierten Diodensignale von Vorteil.

Nachfolgend wird kurz dargestellt, wie die Vorspannkraft zu errechnen ist:

Für jeweils eine Wellenlänge $\lambda_1$ bzw. $\lambda_2$ läßt sich eine Phasenverschiebung $\delta_1$ bzw. $\delta_2$ bestimmen, die modulo $2\pi$ der Phasenverschiebung entspricht, die durch die mechanische Spannung im LWL 4 induziert wurde. Aus der Kenntnis dieser beiden Phasenverschiebungen folgt die Anzahl N der $2\pi$-Perioden unter der Voraussetzung, daß in beiden Fällen N gleich ist, zu

$$N = 1/2\pi(\delta_1\lambda_1 - \delta_2\lambda_2)/(\lambda_2-\lambda_1) \quad (6)$$

Aus einer der beiden Phasenverschiebungen und Wellenlängen ergibt sich dann die mechanische Spannung zu

$$\sigma = 1/\pi(q_{12} - q_{11})^{-1} \lambda\delta L^{-1} n^{-3} \quad (7)$$

worin mit $q_{12}$, $q_{11}$ die piezooptischen Konstanten, deren Differenz für Quarzglas $q_{12}$-$q_{11}$ = 2,3•$10^{-12}$ Pa betragen, mit L die Länge des Lichtwellenleiters und mit n der Brechungsindex von spannungsfreiem Quarzglas bezeichnet sind.

Bei einer typischen Anwendung eines M16-Dübels ist die Fläche, die von der mechanischen Spannung durchsetzt wird, 1,5 x $10^{-4}$ $m^2$ und die Länge 4′ des Lichtwellenleiters in der Unterlagscheibe beträgt 0,06 m. Verwendet man außerdem Halbleiteriaserdiode mit einer Lichtwellenlänge um 800nm, so gilt für die Vorspannkraft (in N, $\delta$ in Radians) für einen Brechungsindex n = 1,46 (Quarzglas)

$$F = 87{,}0\,\delta \quad (8)$$

Um N eindeutig bestimmen zu können, muß der Wellenlängenunterschied $\Delta\lambda$ den gewünschten Meßbereich der Kraft $F_{max}$ mittels der Beziehung

$$\Delta\lambda = 0{,}683 \cdot 10^9 \lambda^2/F_{max} \quad (10)$$

angepaßt werden. Für einen Meßbereich von beispielsweise 30 kN ergibt sich damit $\Delta\lambda$ zu 14,6nm. Ersichtlicherweise ist dieser Wellenlängenunterschied von über 1 % zur Zeit weder durch Strommodulation der Laserdiode noch durch nachträgliche akustooptische Lichtmodulation zu erzeugen, d. h. es sind, wie in Fig. 4 angedeutet, tatsächlich zwei Laserdioden mit einem Wellenlängenunterschied in der angegebenen Größenordnung zu verwenden.

Das zweite, nachfolgend erläuterte grundsätzliche Meßprinzip gemäß der Erfindung beruht auf dem bereits erwähnten **Kompensationsverfahren.**

Anstatt mit zwei Wellenlängen zu operieren, um simultan oder sequentiell zwei verschiedene Phasenwerte zur Beseitigung der modulo $2\pi$-Ungewißheit zu bestimmen, wird das auf einem Kompensationsprinzip beruhende alternative Verfahren mit der Erfindung vorgeschlagen.

Die Fig. 6 verdeutlicht schematisch das Prinzip dieser Meßmethode, wobei hinsichtlich des konkreten Meßaufbaus gleichzeitig auf Fig. 10 Bezug genommen wird.

Nichtkohärentes Licht einer Lichtquelle LQ (z. B. LED oder Halogenlampe) durchläuft einen eingangsseitigen Polarisator POE und gelangt sodann auf den monomodigen LWL 4, wobei die beiden Hauptkomponenten des Lichts im LWL 4 im Bereich des faseroptischen Kraftsensors auf eine Länge L (entsprechend 4′) unterschiedlich beeinflußt werden. Durch einen elektronisch gesteuerten Kompensator 20 wird der durch die Kraft F induzierte Phasen- oder Gangunterschied aufgehoben, d. h. kompensiert. Das hierzu im Kompensator 20 erforderliche Steuersignal ist ein direktes Maß für die wirkende Kraft. Als Kompensator kann im Prinzip die bereits anhand der Fig. 5 erläuterte Phasenschiebeeinheit dienen, d. h. beispielsweise ein modifiziertes Michelson-Interferometer, bestehend aus einem polarisierenden Strahlteiler PST, der die beiden unterschiedlich polarisierten Lichtwellen trennt und zwei $\lambda$/4-Platten 11, 12, die nach doppeltem Durchlauf (Reflexion an den Spiegeln 9 bzw. 10) die Polarisationsrichtung um 90° drehen, so daß sich beide Teilstrahlen im Polarisator POL überlagern und die Photodiode PD beaufschlagen. Die Kompensation des Gangunterschieds wird mittels der Mikroprozessorsteuerung 16 über den am Piezo-Stellelement 15 befestigten Spiegel 10 bewirkt.

Die durch die Kraft F im faseroptischen Kraftsensor bewirkte Phasenverschiebung ist gegeben zu

$$\delta_{LWL}(F) = \frac{2\pi}{\lambda} L\Delta n(F) \quad (10)$$

Für den durch den Kompensator 20 durch Wegverschiebung des Spiegels 10 um den Betrag d/2 auszugleichenden Phasenunterschied gilt der Ansatz

$$\delta_K = \frac{2\pi}{\lambda} \cdot d \quad (11)$$

Für eine feste Wellenlänge λ gilt für das Intensitätssignal an der Photodiode PD

$$I = \frac{I_0}{2} \{1 - q(|d(F)-d|) \cdot \cos \frac{2\pi}{\lambda} (d(F)-d)\} \qquad (12)$$

Darin bezeichnet q eine Kohärenzfunktion, die abhängig ist vom Gangunterschied (Phasenunterschied) der beiden Lichtwellen unterschiedlicher Polarisation. Es gilt:

$$q = e^{-\left(\frac{d(F)-d}{l_{koh}}\right)^2 \ln 2} \qquad (13)$$

Mit $l_{koh}$ ist die Kohärenzlänge bezeichnet, die gegeben ist durch

$$l_{koh} = \frac{\lambda^2}{\Delta\lambda} \qquad (14)$$

worin mit Δλ die spektrale Breite der Lichtquelle bezeichnet ist.

Die Kohärenzfunktion q gemäß Gleichung (13) läßt eine Gaußverteilung erkennen.

Berücksichtigt man die spektrale Verteilung der Lichtquelle g (λ), die spektrale Empfindlichkeit des Detektors $\eta$ (λ) sowie die gaußförmige Verteilung der Kohärenzfunktion q, so gilt der Zusammenhang:

$$I = \frac{I_0}{2} \left(1 + q \left(\frac{\int_0^\infty d\lambda\, g(\lambda)\, \eta(\lambda) (1 - (\cos \frac{2\pi}{\lambda} L\Delta n(F) - d))}{\int_0^\infty d\lambda\, g(\lambda)\, \eta(\lambda)} - 1\right)\right) \qquad (15)$$

Die Fig. 7 und 8 zeigen berechnete Kurven für den Intensitätsverlauf bei Verwendung einer LED (Fig. 7) einerseits und einer Halogenlampe (Fig. 8) andererseits, wobei das jeweilige Spektrum der Lichtquellen mit ihren Kohärenzlängen (LED 8μm; Halogenlampe 1,5μm) und die spektrale Empfindlichkeit der Photodiode PD berücksichtigt wurden. Das Photodiodensignal ist in beiden Fällen in normierten Einheiten gegen die Wegverschiebung des Spiegels 10 aufgetragen. Man erkennt - insbesondere bei der Halogenlichtquelle (Fig. 8) - ein ausgeprägtes Minimum an der Stelle, ar. welcher der Gangoder Phasenunterschied im LWL 4 durch den im Kompensator 20 aufgehoben ist. Die Hüllkurve der "abklingenden" Oszillationen hängt mit von der spektralen Breite Δλ und der Kohärenzlänge $l_{koh}$ der jeweiligen Lichtquelle ab.

Durch ein elektronisch steuerbares Kompensatorelement - im dargestellten Ausführungsbeispiel der Fig. 10 das PiezoStellelement 15 - wird die durch die Kraft im belasteten Bauelement, d. h. im LWL 4 induzierte Phasenverschiebung aufgehoben (kompensiert). Das hierzu benötigte Steuersignal ist deshalb ein direktes Maß für die wirkende Kraft.

Mit den bisher verwendeten Parametern gilt wiederum für die typische Anwendung bei einem M16 Dübel der unschwer ableitbare Zusammenhang:

$$F(kN) = 1.36\ d_{min}\ (\mu m) \qquad (16)$$

Die Fig. 9 zeigt eine tatsächliche Meßkurve bei Verwendung von Halogenlicht als nichtkohärente Lichtquelle LQ (Weißlichtquelle). Ähnlich wie bei den berechneten Kurven nach den Fig. 7 und 8 ist das Minimum deutlich ausgeprägt, wenngleich die real gemessene Kurve wegen der nichtidealen Komponenten ein nicht vollständige Durchmodulation erkennen läßt.

Hinsichtlich Genauigkeit und Reproduzierbarkeit der Meßergebnisse sind das oben beschriebene Phasenstufenverfahren sowie das zuletzt erläuterte Kompensationsverfahren etwa gleichwertig. Für die praktische Anwendung und Wirtschaftlichkeit hat das Kompensationsverfahren jedoch den entscheidenden Vorteil, daß keine monochromatischen Lichtquellen benötigt werden, vielmehr mit einer einfachen Weißlichtquelle, beispielsweise einer lichtemittierenden Diode (LED) oder einer Niedervolt-Halogenlampe, gearbeitet werden kann.

**Literaturliste:**

[1]: A. Bertholds, Thesis, 1987
Elastic and photoelastic properties of single-mode optical fibers: application to the measurement of force
[2]: A. Bertholds and R. Dändliker, Applied Optics 25, 340-343 (1986).
"High-resolution photoelastic pressure sensor using low-birefrigence fiber"
[3]: A. Bertholds and R. Dändliker, Journal of Lightwave Technology, 6, 17-20 (1988)
"Determination of the Individual Strain-Optic Coefficients in Single-Mode Optical Fibers"
[4]: A. Bertholds and R. Dändliker, Electronics Letters, 21, 65-67 (1985).
"MICROPROCESSOR-BASED PHASE DETERMINATION FOR HIGH-RESOLUTION OPTICAL SENSORS"
[5]: R. Thalmann, Holografietagung 28./29.6.88, HDT, Essen
"Grundlagen zur rechnergestützten Auswertung holografischer Interferogramme"

**Patentansprüche**

1. Verfahren zur faseroptischen Kraftmessung, die auf der spannungsinduzierten Doppelbrechungsänderung eines Monomode-Lichtwellenleiters(4) beruht, **dadurch gekennzeichnet**, daß zur Erzielung eindeutiger Meßergebnisse, d. h. zur Absolutmessung, zwei Lichtwellen unterschiedlicher Wellenlängen ($\lambda_1$, $\lambda_2$) in ein Ende eines Lichtwellenleiters (4) eingestrahlt werden und ein durch eine Krafteinwirkung auf den Lichtwellenleiter (4) und die daraus folgende Doppelbrechungsänderung verursachter Phasenunterschied der beiden linearen Moden der am anderen Ende des Lichtwellenleiters (4) austretenden Lichtwellen erfaßt und als Maß für die Kraft (N) ausgewertet wird.

2. Verfahren nach Anspruch 1 zur druckspannungsinduzierten Messung des Absolutwerts der Vorspannung eines auf Druck oder Zug belasteten mechanischen Bauteils, **dadurch gekennzeichnet**, daß
   - der Lichtwellenleiter (4) über einen Teilbereich (4') seiner Länge in einer zur Vorspannkraft über ihre Fläche verteilende Scheiben (3a, 3b) in eine druckfeste Ummantelung (5) eingebettet wird,
   - die beiden Lichtwellen in das eine Ende des Lichtwellenleiters (4) eingekoppelt und die am anderen Ende des Lichtwellenleiters (4) austretenden Lichtwellen über einen polarisierenden Strahlteiler (PST) in die beiden Moden getrennt, photoelektrisch erfaßt und über eine kalibrierte Auswertelogik mit Zwischenspeicherung der Einzelmeßwerte durch Phasenvergleich die Vorspannkraft (N) bestimmt wird.

3. Verfahren nach Anspruch 1 oder 2, **dadurch gekennzeichnet**, daß die beiden Lichtwellen unterschiedlicher Wellenlänge ($\lambda_1$, $\lambda_2$) sequentiell abwechselnd in den Lichtwellenleiter (4) eingestrahlt werden.

4. Verfahren nach Anspruch 1 oder 2, **dadurch gekennzeichnet**, daß die beiden Lichtwellen unterschiedlicher Wellenlänge ($\lambda_1$, $\lambda_2$) bei frequenzmäßig unterschiedlicher Intensitätsmodulation der Lichtquellen ($LD_1$, $LD_2$) gleichzeitig in den Lichtwellenleiter (4) eingestrahlt werden.

5. Einrichtung zur faseroptischen Messung des Absolutwerts der Vorspannung in einem durch Zug- oder Druckkräfte hochbelasteten mechanischen Bauteil, **dadurch gekennzeichnet**, daß
   - ein faseroptischer Lichtwellenleiter (4) über einen zwischen seinen freien Enden liegenden Teilbereich (4') seiner Länge in eine quer zur Kraftrichtung angeordnete druckübertragende Scheibe (3) eingebettet ist,
   - ein Ende des Lichtwellenleiters (4) gleichzeitig oder sequentiell abwechselnd durch zwei monochromatische Lichtquellen ($LD_1$, $LD_2$) unterschiedlicher Wellenlänge ($\lambda_1$, $\lambda_2$) beaufschlagt ist, und daß
   - die beiden Lichtwellen unterschiedlicher Wellenlänge ($\lambda_1$, $\lambda_2$) am anderen Ende des Lichtwellenleiters (4) getrennt erfaßbar und als elektrische Signale einer Phasenvergleichsschaltung und Auswertelogik zuführbar sind.

6. Einrichtung nach Anspruch 5, **dadurch gekennzeichnet**, daß die beiden Lichtquellen ($LD_1$, $LD_2$) über je eine Kollimatoreinrichtung einen Strahlteiler (ST1) beaufschlagen, der so angeordnet ist, daß definiert polarisierte Lichtstrahlen in den Lichtwellenleiter (4) eingekoppelt werden.

7. Einrichtung nach Anspruch 6, **dadurch gekennzeichnet**, daß der Strahlteiler (ST1) so ausgelegt und angeordnet ist, daß die polarisierten Lichtstrahlen unter 45° Verkippung zur optischen Achse der doppelbrechenden Komponente in den Lichtwellenleiter (4) eingekoppelt werden.

8. Einrichtung nach einem der vorstehenden Ansprüche 5 bis 7, **dadurch gekennzeichnet**, daß die beiden Moden der am anderen Ende des Lichtwellenleiters (4) austretenden Lichtwellen über einen polarisierenden Strahlteiler (PST) getrennt und nach Durchlaufen je einer $\lambda/4$-Platte (8, 8') und eines Polarisators ($P_1$, $P_2$) durch je einen zugeordneten Photodetektor ($PD_1$, $PD_2$) erfaßt und nach der Quadraturmethode zur Bestimmung der Phasendifferenz und daraus folgend Errechnung der Vorspannkraft (N) ausgewertet werden.

9. Einrichtung nach einem der vorstehenden Ansprüche 5 bis 7, **dadurch gekennzeichnet**, daß die beiden Moden der am anderen Ende des Lichtwellenleiters (4) austretenden Lichtwellen über einen polarisierenden Strahlteiler (PST) getrennt und nach Durchlaufen je einer $\lambda/4$-Platte an Spiegeln (9, 10) eines Michelson-Interferometers reflektiert und nach Durchlaufen eines Polarisators (POL) gemeinsam einen Photodetektor (PD) beaufschlagen, wobei der eine Spiegel (10) zur Änderung der Phasendifferenz zwischen den beiden Lichtstrahlen um definierte Festbeträge ($\Phi_i$) senkrecht zur Spiegelfläche verstellbar ist, so daß nach der Phasenschiebemethode unter Berücksichtigung von Intensitätsunterschieden oder -schwankungen der Lichtquellen ($LD_1$, $LD_2$) und Schwankungen des Modulationsgrads aufgrund einer Mehrzahl von erfaßten Meßwerten die Phasendifferenz und daraus folgend die Vorspannkraft (N) bestimmbar sind.

10. Einrichtung nach einem der vorstehenden Ansprüche 5 bis 9, **dadurch gekennzeichnet**, daß die beiden Lichtquellen ($LD_1$, $LD_2$) monomodige Infrarot-Laserdioden sind.

11. Einrichtung nach Anspruch 10, **dadurch gekennzeichnet**, daß die Wellenlängen ($\lambda_1$, $\lambda_2$) der von den Laserdioden ($LD_1$, $LD_2$) abgegebenen Lichtwellen im Bereich von 800nm liegen und sich um etwa 5 bis 20nm, vorzugsweise etwa 10 bis 15nm, voneinander unterscheiden.

12. Verfahren zur faseroptischen Kraftmessung, die auf der spannungsinduzierten Doppelbrechungsänderung eines Monomode-Lichtwellenleiters(4) beruht, **dadurch gekennzeichnet**, daß zur Erzielung eindeutiger Meßergebnisse, d. h. zur Absolutmessung, polarisiertes, nichtkohärentes Licht, vorzugsweise Weißlicht, in ein Ende des Lichtwellenleiters (4) eingestrahlt und ein durch eine die Krafteinwirkung auf den Lichtwellenleiter (4) und die daraus folgende Doppelbrechungsänderung verursachte Phasenunterschied der beiden linearen Moden der am anderen Ende des Lichtwellenleiters (4) austretenden Lichtwellen kompensiert wird, und daß ein zur Kompensation erforderliche Steuersignal als Maß für die Kraft ausgewertet wird.

13. Verfahren nach Anspruch 12 zur druckspannungsinduzierten Messung des Absolutwerts der Vorspannung eines auf Druck oder Zug belasteten mechanischen Bauteils, **dadurch gekennzeichnet**, daß der Lichtwellenleiter (4) über einen Teilbereich (4') seiner Länge in einer zur Vorspannkraft senkrechten Ebene zwischen die Vorspannkraft über ihre Fläche verteilende Scheiben (3a, 3b) in eine druckfeste Ummantelung (5) eingebettet wird.

14. Einrichtung zur faseroptischen Messung des Absolutwerts der Vorspannung in einem durch Zug- oder Druckkräfte hochbelasteten mechanischen Bauteil, **dadurch gekennzeichnet,** dass
    - ein Lichtwellenleiter (4) über einen Teilbereich (4') seiner Länge in einer zur Vorspannkraft senkrechten Ebene zwischen die Vorspannkraft über ihre Fläche verteilende Scheiben (3a, 3b) in eine druckfeste Ummantelung (5) eingebettet ist,
    - ein Ende des Lichtwellenleiters (4) mit polarisiertem, nichtkohärentem Licht, vorzugsweise Weisslicht, beaufschlagt ist,
    - durch eine Krafteinwirkung auf den Lichtwellenleiter (4) eine Doppelbrechungsänderung erfolgt, die einen Phasenunterschied der beiden linearen Moden der am anderen Ende des Lichtwellenleiters (4) austretenden Lichtwellen verursacht,
    - zur Phasenkompensation ein mit vorgeschaltetem polarisierendem Strahlteiler (PST) zur Modentrennung und an dessen Ausgängen mit $\lambda/4$-Platten (11, 12) versehenes Michelson-Interferometer mit elektronisch verstellbarer Spiegelanordnung (10) eingesetzt ist, und dass das die Spiegelverstellung zur Kompensation des Phasenunterschieds bewirkende Steuersignal ein Mass für die Kraft ist.

**15.** Einrichtung nach einem der Ansprüche 5 bis 11 oder nach Anspruch 14, **dadurch gekennzeichnet**, daß der Teilbereich (4') des Lichtwellenleiters (4) zwischen zwei planparallel angeordneten Metallscheiben (3a, 3b) in eine druckfeste Masse (5) eingebettet ist.

**16.** Einrichtung nach Anspruch 15**, dadurch gekennzeichnet**, daß der Lichtwellenleiter (4) von einem in die druckfeste Masse (5) eingelagerten Abstandshalter (6a, 6b) umgeben ist.

**17.** Einrichtung nach Anspruch 15, **dadurch gekennzeichnet**, daß die druckfeste Masse (5) schmelzfähig ist mit einem unter dem Transformationspunkt des Lichtwellenleitermaterials liegenden Schmelzpunkt.

**18.** Einrichtung nach Anspruch 17, **dadurch gekennzeichnet**, daß die druckfeste Masse (5) ein Glaslot ist.

**19.** Einrichtung nach Anspruch 16, **dadurch gekennzeichnet**, daß die druckfeste Masse ein Kunststoffmaterial mit hohem Anteil an Füllmaterial, wie Aluminiumoxid, Quarz, Erosil, Siliciumcarbid, oder dergleichen ist, das entweder kalt oder warm oder durch UV-Strahlen aushärtbar ist.

**20.** Einrichtung nach einem der vorstehenden Ansprüche 5 bis 11 bzw. 14 bis 19, **dadurch gekennzeichnet**, daß das mechanische Bauteil ein Schwerlastdübel (D) ist und daß die Scheibe (3), in welche der Teilbereich (4') des Lichtwellenleiters (4) eingebettet ist, in Form einer druckverteilenden Unterlagscheibe gestaltet ist.

## Claims

**1.** A process for fibre-optical load measuring based on a stress induced double-refracting change of a monomode optical fibre (4), **characterized in that** for the purpose of obtaining well defined measuring results, i.e. for absolute measuring, two lightwaves of different wavelengths ($\lambda_1$, $\lambda_2$) are beamed into one end of an optical fibre (4), and a phase difference of the two linear modes of lightwaves exiting at the other end of the optical fibre (4), caused by the effect of a load on the optical fibre (4) and a resulting double-refracting change, is determined and evaluated as a measure of a load (N).

**2.** A process according to claim 1 for pressure-load induced measuring of the absolute value of the initial stress of a mechanical component which is pressure- or tensile-stress loaded, **characterized in that**
- the optical fibre (4) is over a partial range (4') of its length embedded in a pressure-resistant casing (5) in discs (3a, 3b) distributing the initial stress over its surface;
- the two lightwaves are coupled into the one end of the optical fibre (4), and the lightwaves exiting at the other end of the optical fibre (4) are separated by a polarizing beam splitter (PST) into both modes, photoelectrically detected, and the initial stress (N) is determined by way of phase comparison via a calibrated evaluation logic with intermediate storage of the individual measuring values.

**3.** A process according to claim 1 or 2**, characterized in that** the two lightwaves of different wavelength ($\lambda_1$, $\lambda_2$) are sequentially alternatingly beamed into the optical fibre (4).

**4.** A process according to claim 1 or 2, **characterized in that** the two lightwaves of different wavelength ($\lambda_1$, $\lambda_2$) with frequencially different intensity modulation of the light sources ($LD_1$, $LD_2$) are simultaneously beamed into the optical fibre (4).

**5.** A device for fibreoptical measuring of the absolute value of initial stress in a pressure- or tensile-stress loaded mechanical component, **characterized in that**
- a fibre-optic lightwave conductor (4) is embedded over a partial area (4') of its length located between its free ends in a pressure transmitting disc (3) which is arranged transversely to the load direction;
- one end of the optical fibre (4) is simultaneously or sequentially alternatingly loaded by two monochromatic light sources ($LD_1$, $LD_2$) of different wavelengths ($\lambda_1$, $\lambda 2$); and that
- the two light sources of different wavelengths ($\lambda_1$, $\lambda_2$) are separately detected at the other end of the optical fibre (4) and delivered as electrical signals to a phase comparison circuit and evaluation logic.

**6.** A device according to claim 5, **characterized in that** the two light sources ($LD_1$, $LD_2$) load via a respective collimator a beam splitter (ST1) which is arranged in such a manner that defined polarized lightbeams are coupled into the optical fibre (4).

**7.** A device according to claim 6, **characterized in that** the beam splitter (ST1) is designed and arranged in such a manner that the polarized lightbeams are coupled into the optical fibre (4) under a 45° tilt relative to the optical axis of the double refracting component.

**8.** A device according to one of the above claims 5 to 7, **characterized in that** the two modes of the lightwaves exiting at the other end of the optical fibre (4) are separated by a polarizing beam splitter (PST) and, after having passed through a respective λ/4-plate (8, 8') and a polarizer ($P_1$, $P_2$), detected by a respective associated photo detector ($PD_1$, $PD_2$) and evaluated by the quadrature method for determining the phase difference and therefrom resulting calculation of the initial load (N).

**9.** A device according to one of the above claims 5 to 7, **characterized in that** the two modes of the lightwaves exiting at the other end of the optical fibre (4) are separated by a polarizing beam splitter (PST) and, after having passed through a respective λ/4 plate, reflected on mirrors (9, 10) of a Michelson interferometer and, after having passed through a polarizer (POL), jointly load a photo detector (PD), and that the one mirror (10) is adjustable vertically to the mirror surface by defined fixed amounts ($\Phi_i$) for the purpose of altering the phase difference between both lightbeams, so that the phase difference and a therefrom resulting initial stress (N) can be determined by way of the phaseshift method whilst taking into consideration intensity differences or intensity fluctuations of the light sources ($LD_1$, $LD_2$) and fluctuations of the degree of modulation as based on a plurality of determined measuring values.

**10.** A device according to one of the above claims 5 to 9, **characterized in that** the two light sources ($LD_1$, $LD_2$) are monomode infrared laser diodes.

**11.** A device according to claim 10, **characterized in that** the wavelengths ($\lambda_1$, $\lambda_2$) of lightwaves emitted by the laser diodes ($LD_1$, $LD_2$) are within a range of 800 nm and differ from each other by approximately between 50 and 20 nm, preferably between 10 and 15 nm.

**12.** A process for fibre-optical load measuring based on stress- induced double-refracting change of a monomode optical fibre (4), **characterized in that**, for the purpose of obtaining well defined measuring results, i.e. for absolute measuring, polarized incoherent light, preferably white light, is beamed into one end of the optical fibre (4), and a phase difference of the two linear modes exiting at the other end of the optical fibre (4), caused by the effect of a load on the optical fibre (4) and therefrom resulting double-refracting change, is compensated, and a control signal required for compensation is evaluated as a measure of load.

**13.** A process according to claim 12, for pressure-load induced measuring of the absolute value of an initial stress of a pressure-or tensile-loaded mechanical component, **characterized in that** the optical fibre (4) is embedded into a pressure-resistant casing (5) over a partial area (4') of its length in a vertical plane relative to the initial load between discs (3a, 3b) which distribute the initial load over its surface.

**14.** A device for fibreoptic measuring of the absolute value of an initial load in a mechanical component which is highly loaded by tensile or pressure loads**, characterized in that**

- an optical fibre (4) is embedded in a pressure-resistant casing (5) over a partial area (4') of its length in a vertical plane relative to the initial load between discs (3a, 3b) which distribute the initial stress over its surface;
- one end of the optical fibre (4) is loaded with polarized incoherent light, preferably white light;
- a double-refracting change is caused by the effects of a load on the optical fibre (4), causing a phase difference of both linear modes of the lightwaves exiting at the other end of the optical fibre (4);
- a Michelson interferometer, fitted with polarizing beam splitter (PST) at its input for the purpose of mode separation and at its outputs with λ/4 plates (11, 12) and with an electronically adjustable mirror arrangement (10), is used for phase compensation, and that the control signal for the mirror adjustment to compensate the phase difference is a measure of the load.

**15.** A device according to one of claims 5 to 11 or according to claim 14, **characterized in that** the partial area (4') of the optcal fibre (4) is embedded in a pressure-resistant mass (5) between two plane-parallel arranged metal discs (3a, 3b).

**16.** A device according to claim 15, **characterized in that** the optical fibre (4) is surrounded by a spacer (6a, 6b) which is fitted in the pressure-resistant mass (5).

**17.** A device according to claim 15, **characterized in that** the pressure-resistant mass (5) is meltable with a melting point below the transformation point of the optical-fibre material.

**18.** A device according to claim 17, **characterized in that** the pressure-resistant mass (5) is a glass solder.

**19.** A device according to claim 16, **characterized in that** the pressure-resistant mass is a synthetic material with a high proportion of filler material, such as aluminum oxide, quartz, erosil, silicon carbide or the like, which is hardened either cold or hot by UV-rays.

**20.** A device according to one of the above claims 5 to 11 or 14 to 19, **characterized in that** the mechanical component is a heavy-duty dowel (D) and that the disc (3), into which is embedded the partial area (4') of the optical fibre (4), is designed in the form of a pressure-distributing washer.

## Revendications

**1.** Procédé de mesure de force à fibre optique basé sur la variation de la biréfringence d'un guide d'ondes lumineuses monomode (4) induite par la tension, caractérisé en ce que, pour obtenir des résultats de mesure significatifs, deux ondes lumineuses de différentes longueurs d'ondes ($\lambda_1$, $\lambda_2$) sont injectées dans l'une des extrémités d'un guide d'ondes lumineuses (4), et qu'une différence de phase entre les deux modes linéaires des ondes lumineuses sortant à l'autre extrémité du guide d'ondes lumineuses (4), provoquée par l'action d'une force sur le guide d'ondes lumineuses et par la variation de la biréfringence qui en résulte, est déterminée et interprétée comme critère pour la force (N).

**2.** Procédé selon la revendication 1 pour la mesure de la valeur absolue de la précontrainte d'un élément de construction mécanique sollicité en compression ou en traction, induite par une contrainte de compression, caractérisé en ce

- que le guide d'ondes lumineuses (4) est encastré sur une partie (4') de sa longueur, entre des disques (3a, 3b) répartissant la force de précontrainte sur sa surface, dans une gaine (5) résistant à la pression,
- que les deux ondes lumineuses sont injectées dans l'une des extrémités du guide d'ondes lumineuses (4), que les ondes lumineuses sortant à l'autre extrémité dudit guide d'ondes lumineuses (4) sont divisées en leurs deux modes par l'intermédiaire d'un diviseur de faisceau polarisant (PST), et détectées de manière photo-électrique, et que la force de précontrainte (N) est déterminée par comparaison des phases par l'intermédiaire d'une logique d'analyse étalonnée, avec mémorisation intermédiaire des valeurs de mesure individuelles.

**3.** Procédé selon l'une des revendications 1 ou 2, caractérisé en ce que les deux ondes lumineuses de longueurs d'ondes ($\lambda_1$, $\lambda_2$) différentes sont injectées alternativement de manière séquentielle dans le guide d'ondes lumineuses (4).

**4.** Procédé selon l'une des revendications 1 ou 2, caractérisé en ce que les deux ondes lumineuses de longueurs d'ondes ($\lambda_1$, $\lambda_2$) sont injectées simultanément dans le guide d'ondes lumineuses (4), avec une modulation d'intensité à fréquence variable des sources de lumière ($LD_1$, $LD_2$).

**5.** Dispositif à fibre optique pour la mesure de la valeur absolue de la précontrainte dans un élément de construction mécanique fortement sollicité en traction ou en compression, caractérisé en ce

- qu'un guide d'ondes lumineuses à fibre optique (4) est encastré, sur une partie (4') de sa longueur située entre ses deux extrémités, dans un disque (3) de transmission de pression orienté transversalement à la direction de force,
- qu'une extrémité du guide d'ondes lumineuses (4) est alimentée, simultanément ou alternativement de manière séquentielle, par deux sources de lumière monochromatique ($LD_1$, $LD_2$) de longueurs d'ondes différentes($\lambda_1$, $\lambda_2$), et que les deux ondes lumineuses de longueurs d'ondes différentes($\lambda_1$, $\lambda_2$) peuvent être détectées séparément à l'autre extrémité du guide d'ondes lumineuses (4) et transmises sous la forme de signaux électriques à un circuit de comparaison des phases et à une logique d'analyse.

**6.** Dispositif selon la revendication 5, caractérisé en ce que les deux sources de lumière ($LD_1$, $LD_2$) alimentent chacune par l'intermédiaire d'un collimateur, un diviseur de faisceau (ST1) lequel est agencé de telle façon que des faisceaux lumineux polarisés de la manière définie sont injectés dans le guide d'ondes lumineuses (4).

**7.** Dispositif selon la revendication 6, caractérisé en ce que le diviseur de faisceau (ST1) est conçu et agencé de telle façon que les faisceaux lumineux polarisés sont injectés dans le guide d'ondes lumineuses (4) avec une inclinaison de 45° par rapport à l'axe optique de la composante biréfringente.

**8.** Dispositif selon l'une quelconque des revendications 5 à 7, caractérisé en ce que les deux modes des ondes lumineuses sortant à l'autre extrémité du guide d'ondes lumineuses (4) sont séparés par l'intermédiaire d'un diviseur de faisceau polarisant (PST), détectés chacun par un photodétecteur ($PD_1$, $PD_2$) associé après avoir parcouru respectivement une lame $\lambda/4$ (8, 8') et un polariseur ($P_1$, $P_2$), et analysés d'après la méthode de la quadrature pour la détermination de la différence de phase et, partant, pour le calcul de la force de précontrainte (N).

**9.** Dispositif selon l'une quelconque des revendications 5 à 7, caractérisé en ce que les deux modes des ondes lumineuses sortant de l'autre extrémité du guide d'ondes lumineuses (4) sont séparés par l'intermédiaire d'un diviseur de faisceau polarisant (PST), respectivement réfléchis, après le passage par une lame $\lambda/4$, sur des miroirs (9, 10) d'un interféromètre de Michelson, et transmis ensemble, après le passage par un polariseur (POL), à un photodétecteur (PD), l'un des miroirs (10) pouvant être déplacé, pour la variation de la différence de phase entre les deux faisceaux lumineux, de valeurs fixes ($\Phi_i$) définies perpendiculairement par rapport à la surface réfléchissante, de façon à permettre, par la méthode de déphasage et en tenant compte des différences ou variations de l'intensité des sources de lumière ($LD_1$, $LD_2$) et des variations du taux de modulation, de déterminer, sur la base d'une pluralité de valeurs de mesure enregistrées, la différence de phase et à partir de celle-ci, la force de précontrainte (N).

**10.** Dispositif selon l'une quelconque des revendications 5 à 9, caractérisé en ce que les deux sources de lumière ($LD_1$, $LD_2$) sont des diodes laser monomode à infrarouge.

**11.** Dispositif selon la revendication 10, caractérisé en ce que les longueurs d'ondes ($\lambda_1$, $\lambda_2$) des ondes lumineuses émises par les diodes laser ($LD_1$, $LD_2$) sont de l'ordre de 800 nm et diffèrent l'une de l'autre d'environ 5 à 20 nm, de préférence de 10 à 15 nm.

**12.** Procédé de mesure de force à fibre optique basé sur la variation de la biréfringence d'un guide d'ondes lumineuses monomode (4) induite par une contrainte, caractérisé en ce que, pour obtenir des résultats de mesure significatifs, c'est-à-dire pour la mesure absolue, de la lumière polarisée non cohérente, de préférence de la lumière blanche, est injectée dans l'une des extrémités du guide d'ondes lumineuses (4), qu'une différence de phase entre les deux modes linéaires des ondes lumineuses sortant à l'autre extrémité du guide d'ondes lumineuses (4), provoquée par l'action d'une force sur ledit guide d'ondes lumineuses (4) et par la variation de la biréfringence qui en résulte, est compensée, et qu'un signal de commande nécessaire pour la compensation est interprété comme critère pour la force.

**13.** Procédé selon la revendication 12 pour la mesure de la valeur absolue de la précontrainte d'un élément de construction mécanique sollicité en compression ou en traction, induite par une contrainte de compression, caractérisé en ce que le guide d'ondes lumineuses (4) est encastré sur une partie (4') de sa longueur, dans un plan perpendiculaire à la force de précontrainte, entre des disques (3a, 3b) répartissant la force de précontrainte sur sa surface, dans une gaine (5) résistant à la pression.

**14.** Dispositif à fibre optique pour la mesure de la valeur absolue de la précontrainte dans un élément de construction mécanique fortement sollicité en traction ou en compression, caractérisé en ce
- qu'un guide d'ondes lumineuses (4) est encastré, sur une partie (4') de sa longueur, dans un plan perpendiculaire à la force de précontrainte, entre des disques (3a, 3b) répartissant la force de précontrainte sur sa surface, dans une gaine (5) résistant à la pression,
- que dans une extrémité du guide d'ondes lumineuses (4) est injectée de la lumière non cohérente polarisée, de préférence de la lumière blanche,
- que l'application d'une force au guide d'ondes lumineuses (4) entraîne une variation de la biréfringence laquelle provoque une différence de phase des deux modes linéaires des ondes lumineuses sortant à l'autre extrémité du guide d'ondes lumineuses (4),
- qu'il comprend, pour la compensation des phases, un diviseur de faisceau polarisant (PST) pour la séparation des modes, monté en amont, et aux sorties de celui-ci, un interféromètre de Michelson muni de lames $\lambda/4$ (11, 12) et d'un système de miroirs (10) déplaçables électroniquement, et que le signal de commande provoquant le déplacement des miroirs pour la compensation de la différence de phase, est un critère pour la force.

**15.** Dispositif selon l'une quelconque des revendications 5 à 11 ou selon la revendication 14, caractérisé en ce que la partie (4') du guide d'ondes lumineuses (4) est encastrée entre deux disques métalliques (3a, 3b) plans-parallèles, dans une masse (5) résistant à la pression.

**16.** Dispositif selon la revendication 15, caractérisé en ce que le guide d'ondes lumineuses (4) est entouré par un écarteur (6a, 6b) noyé dans la masse (5) résistant à la pression.

**17.** Dispositif selon la revendication 15, caractérisé en ce que la masse (5) résistant à la pression est fusible et présente un point de fusion inférieur au point de transformation du matériau du guide d'ondes lumineuses.

**18.** Dispositif selon la revendication 17, caractérisé en ce que la masse (5) résistant à la pression est un verre à souder.

**19.** Dispositif selon la revendication 16, caractérisé en ce que la masse résistant à la pression est une matière plastique avec une forte proportion de charge telle que de l'oxyde d'aluminium, du quartz, de l'érosil, du carbure de silicium ou analogues, dont le durcissement se fait ou à froid ou à chaud ou par rayons UV.

**20.** Dispositif selon l'une quelconque des revendications 5 à 11 et respectivement 14 à 19, caractérisé en ce que l'élément de construction mécanique est une cheville pour charges lourdes (D) et que le disque (3) dans lequel est encastrée la partie (4') du guide d'ondes lumineuses (4) présente la forme d'une rondelle répartissant la pression.

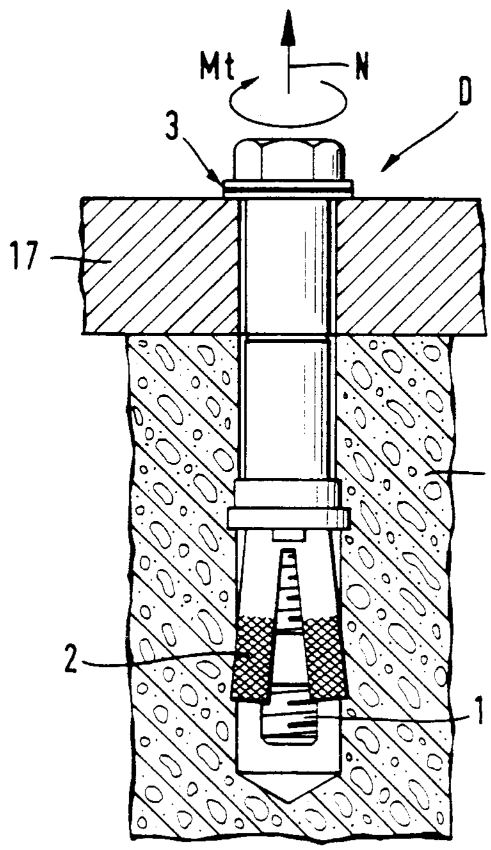


Fig. 1

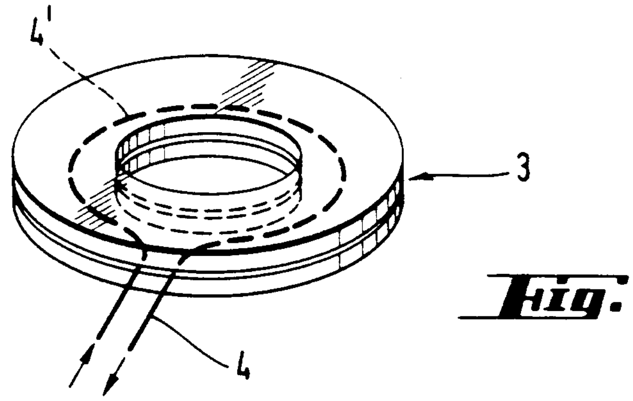


Fig. 2

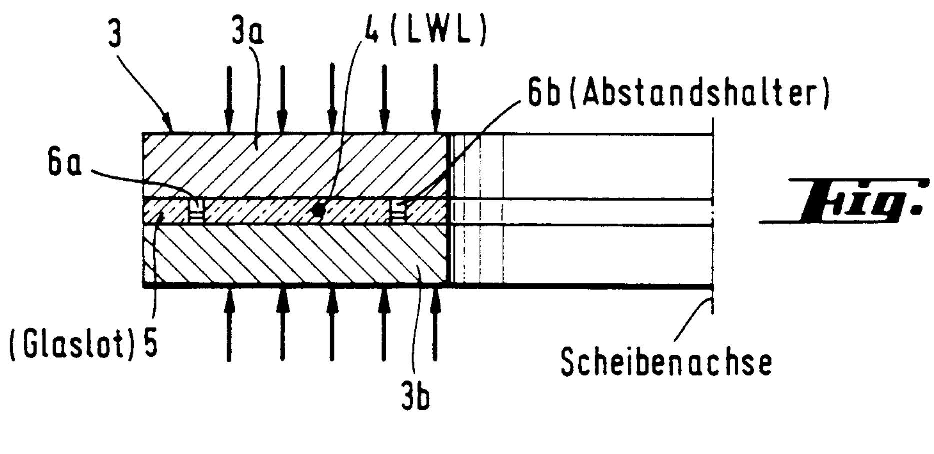


Fig. 3

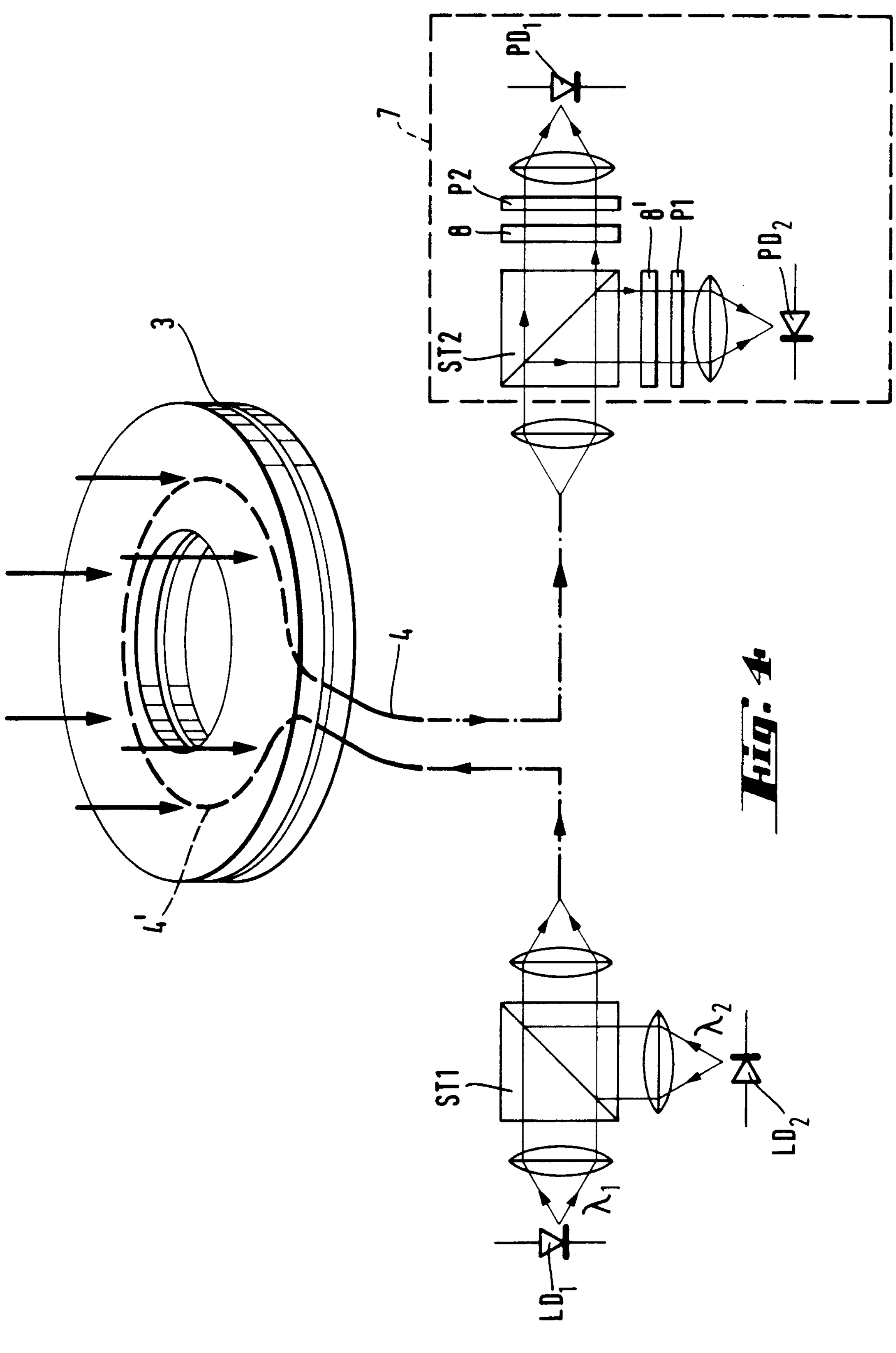


Fig. 4

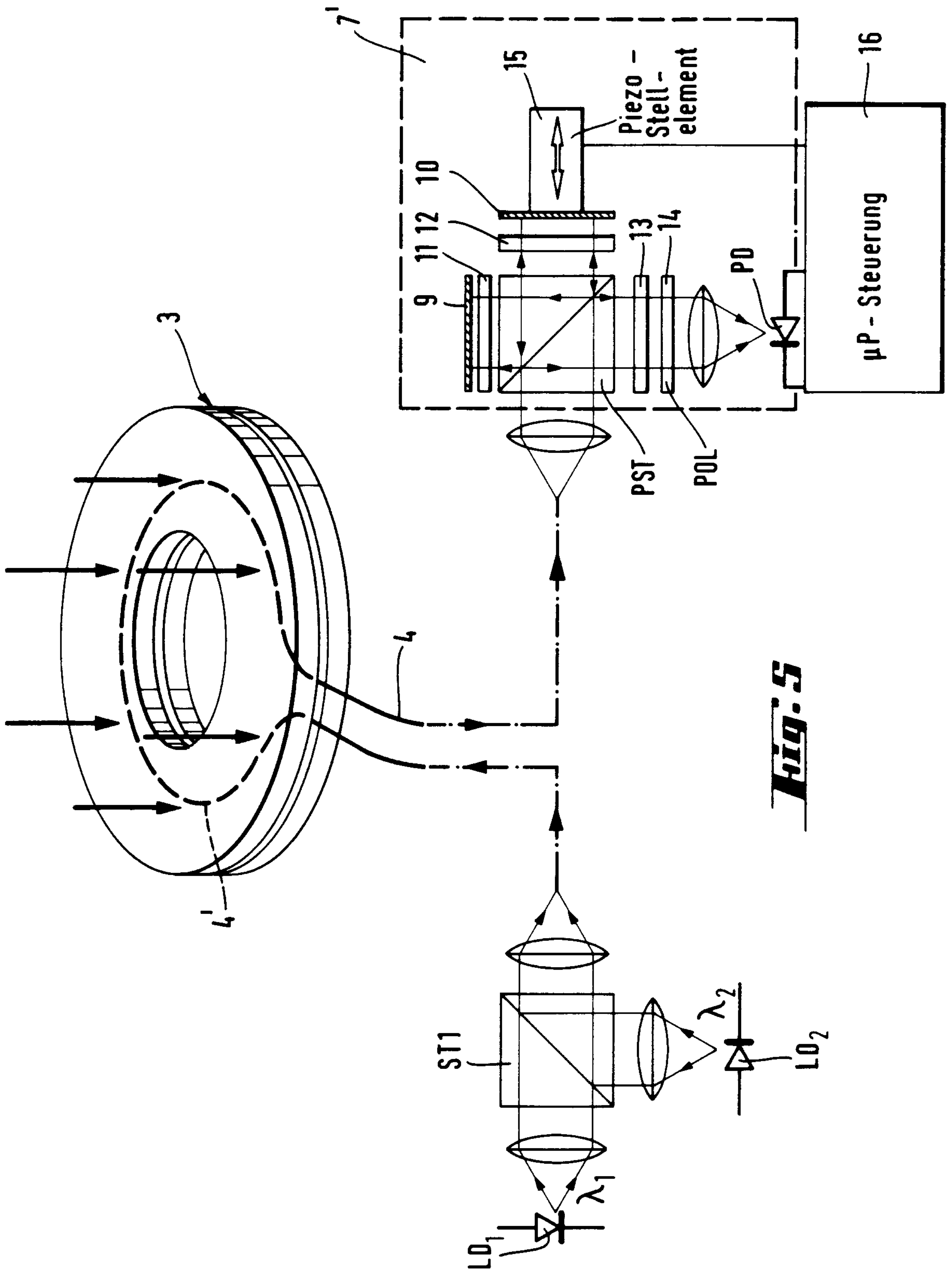
7'
15
Piezo - Stell- element
16
10
11
12
9
13
14
PD
µP - Steuerung
PST
POL
3
4
4'
ST1
LD1
LD2
λ1
λ2

Fig. 5

Fig. 6

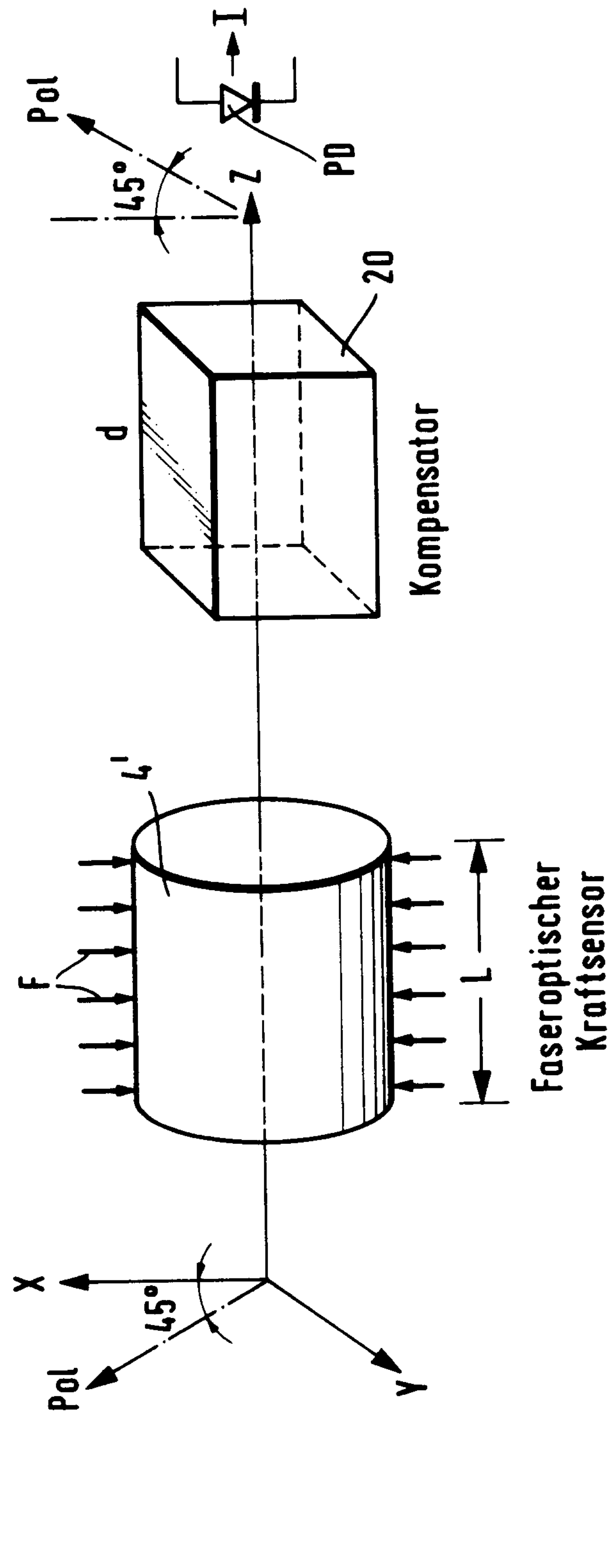
Pol
45°
Z
I
PD
20
d
Kompensator
4'
F
L
Faseroptischer
Kraftsensor
X
Y

Fig. 7 WEISSLICHTPOLARIMETER, LED

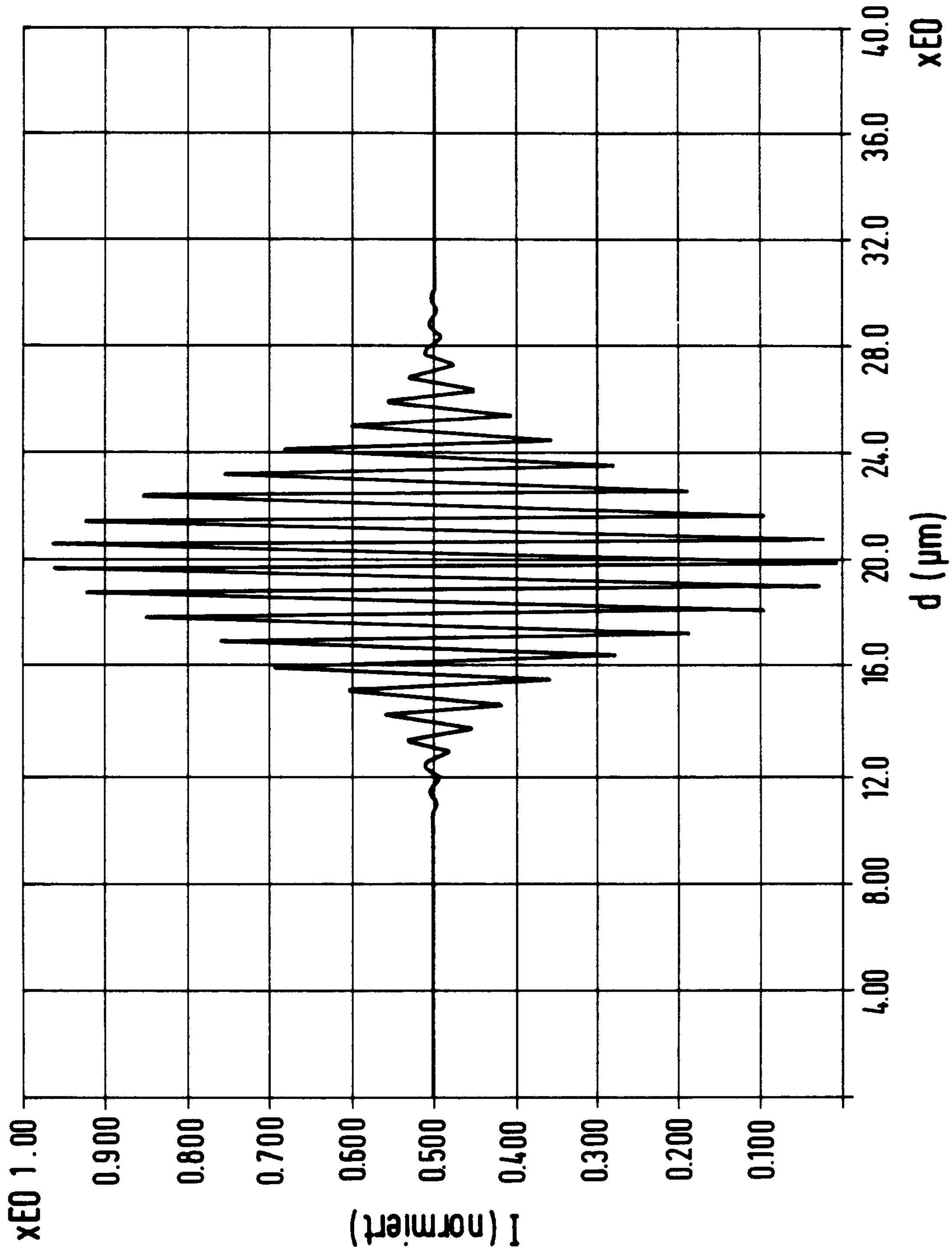

Fig. 8 WEISSLICHTPOLARIMETER, HALOGEN

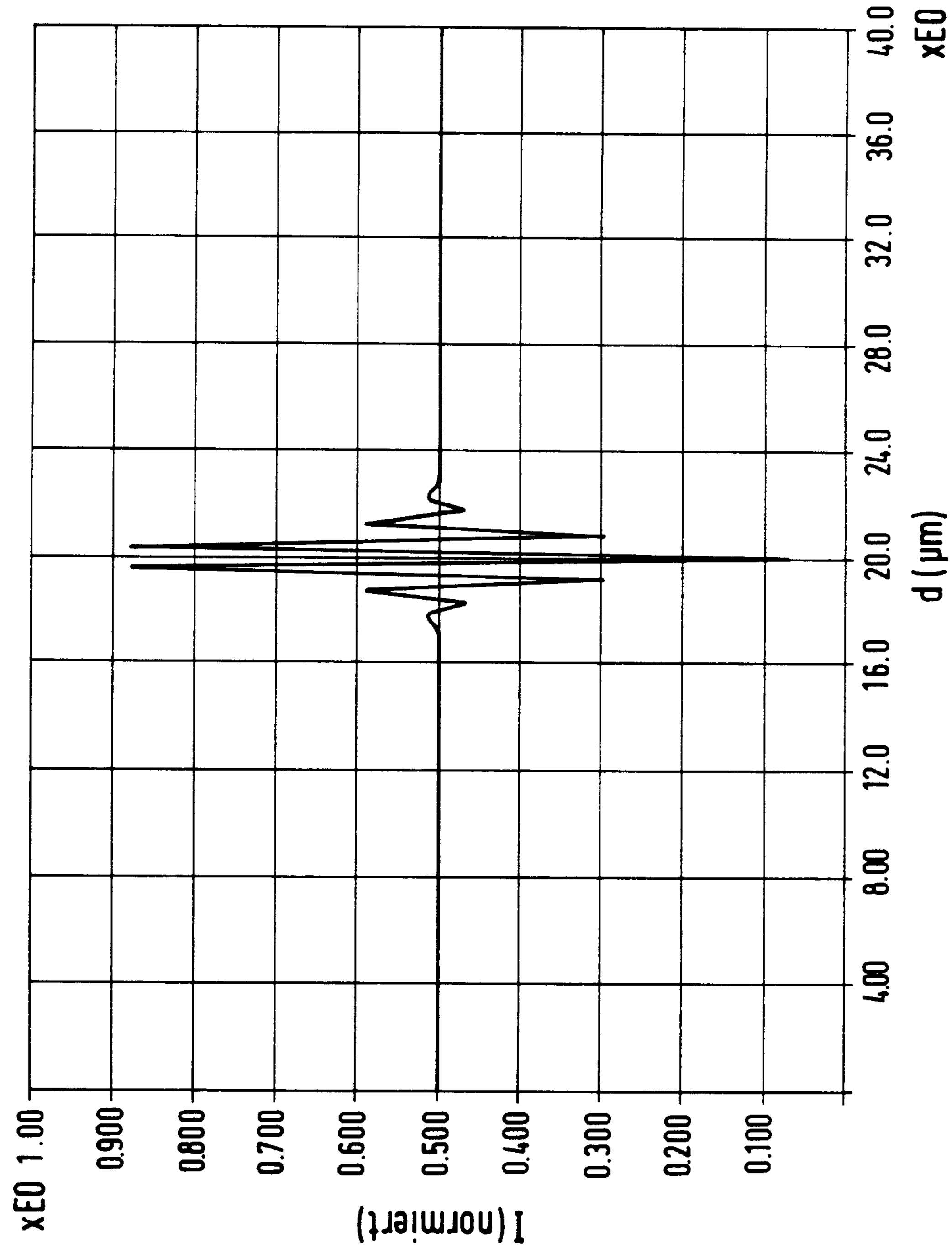

Fig. 9 WEISSLICHTPOLARIMETER

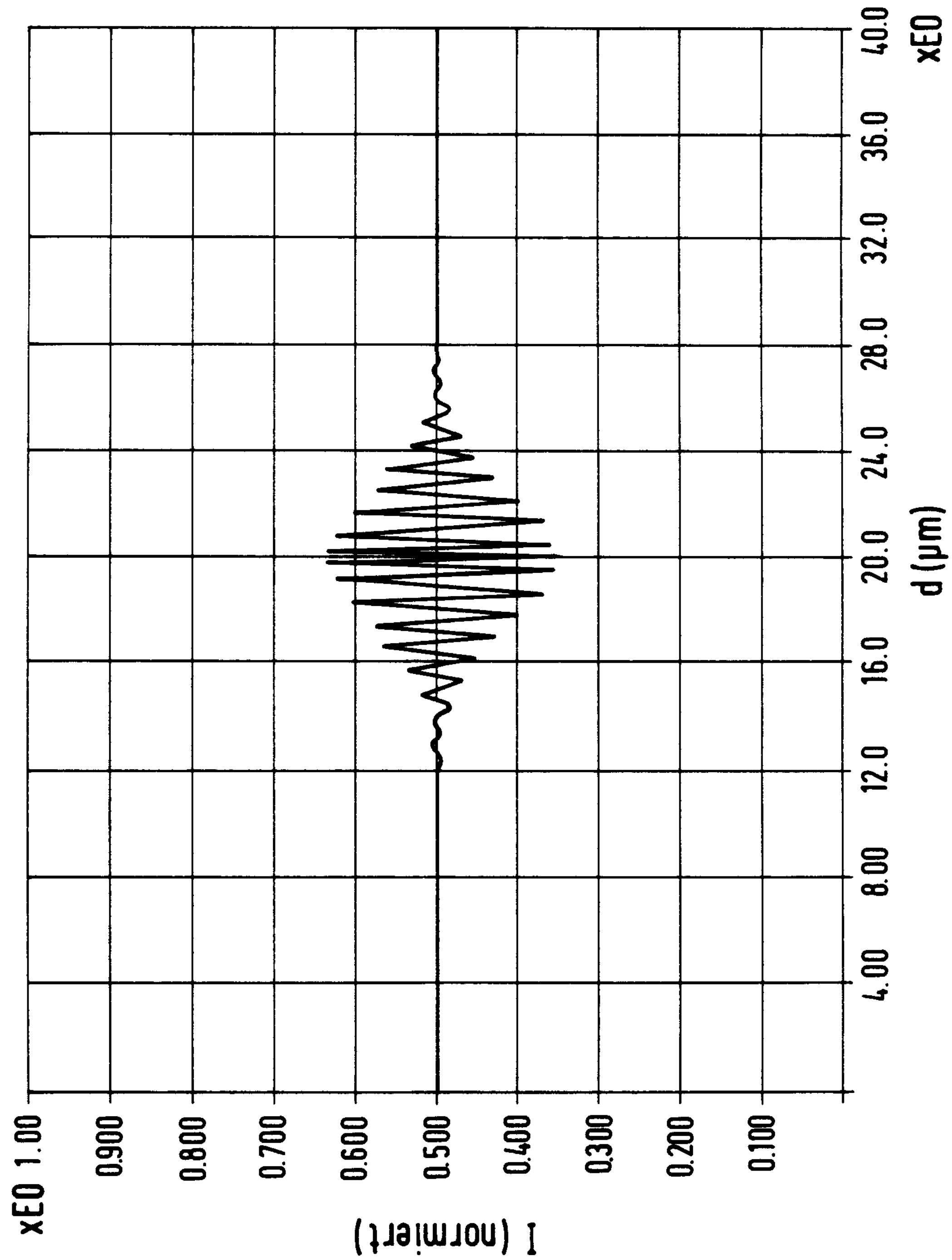

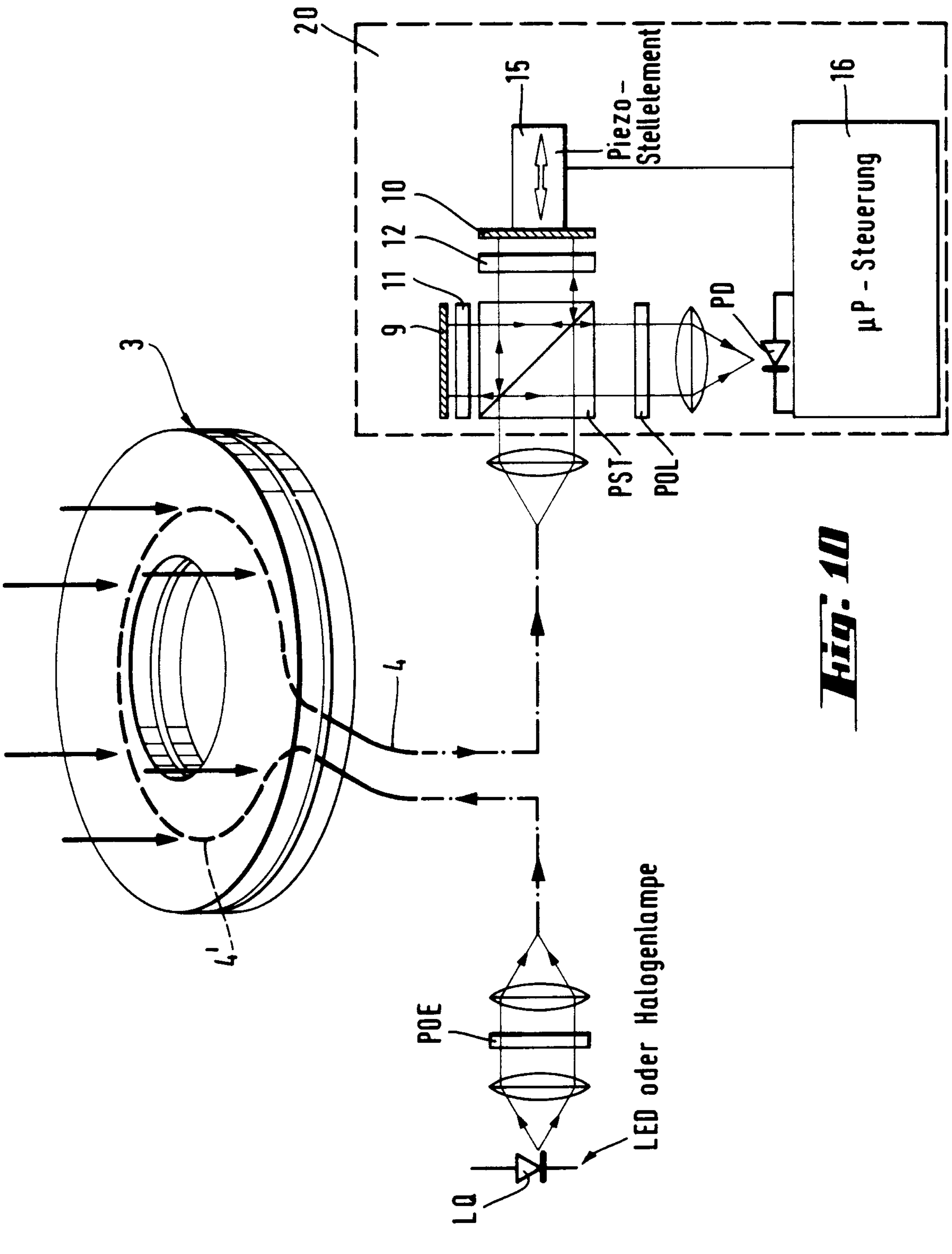
20
15
Piezo-
Stellelement
16
µP - Steuerung
10
12
11
9
PD
PST
POL
3
4
4'
POE
LED oder Halogenlampe
LQ

Fig. 10